# EUROPÄISCHE PATENTANMELDUNG

(11) **EP 1 049 003 A2**
(43) Veröffentlichungstag der Anmeldung: **02.11.2000**
(21) Anmeldenummer: 00108296.5
(22) Anmeldetag: 14.04.2000
(51) Int. Cl.: G06F 9/40

(54) **Verfahren zur Steuerung einer Datenverarbeitungs-Anlage und Datenverarbeitungsanlage**

(30) Priorität: 23.04.1999 DE 19918506
(71) Anmelder: Tenovis GmbH & Co. KG, 60227 Frankfurt (DE)
(72) Erfinder: Hemmerich, Thomas, 63477 Maintal (DE)

(57) **Zusammenfassung**

Es wird ein Verfahren zur Steuerung einer Datenverarbeitungsanlage (10) und eine Datenverarbeitungsanlage (10) vorgeschlagen, wobei die Datenverarbeitungsanlage (10) wenigstens zwei Betriebszustände (151, 152, 153) eingenommen werden, daß Übergänge zwischen den Betriebszuständen (151, 152, 153) durch Aktionen (110, 120, 130) der Datenverarbeitungsanlage (10) durchgeführt werden, daß jede der Aktionen (110, 120, 130) wenigstens ein Programmabschnitt (201, 202, 203, 204) des Steuerprogramms zugeordnet ist, wobei die Datenverarbeitungsanlage (10) durch den wenigstens einen Programmabschnitt (201, 202, 203, 204) die Entsprechende der Aktionen (210, 220, 230) durchführt und wobei die Zuordnung der Programmabschnitte (201, 202, 203, 204) zu den Aktionen (210, 220, 230) gemäß eines vorgegebenen Musters gespeichert wird.

## Beschreibung

### Stand der Technik

Es sind Verfahren zur Steuerung einer Datenverarbeitungsanlage, insbesondere Telekommunikationsanlage, bekannt, die ein Steuerprogramm benutzen. Solche Steuerprogramme können sich durch einen im Vergleich zu ihrer Größe, relativ großen Anteil von redundantem Code auszeichnen. Diese werden nach den heute üblichen Methoden, beispielsweise top-down, prozedural, objektorientiert oder dergleichen, geschrieben. Der Betrieb einer Datenverarbeitungsanlage, die von solchen, nach den üblichen Methoden geschriebenen Programmen gesteuert wird, ist in ihrer Funktionsweise im allgemeinen auf das Steuerprogramm festgelegt und kann nur durch relativ großen Aufwand, beispielsweise Neukompilierung des Programms oder dergleichen, abgeändert werden. Insbesondere ist eine Änderung der Steuerung der Datenverarbeitungsanlage während der Laufzeit des Steuerprogramms nicht möglich.

### Vorteile der Erfindung

Das erfindungsgemäße Verfahren mit den Merkmalen des Hauptanspruchs und die Datenverarbeitungsanlage mit den Merkmalen des nebengeordneten Anspruchs 9 haben demgegenüber dem Vorteil, daß sich Redundanzen im Steuerprogramm vermeiden lassen, da ein mehrfach ausgeführtes Programmsegment in dem Steuerprogramm lediglich einmal vorhanden sein muß. Weiterhin erlaubt dies die Zuordnung der Programmsegmente zu den Aktionen gemäß einem vorgegebenen Muster, so daß die Zuordnung und damit die Steuerung der Datenverarbeitungsanlage leicht abänderbar ist.

Durch die in den Unteransprüchen aufgeführten Maßnahmen sind vorteilhafte Weiterbildungen und Verbesserungen des im Hauptanspruch angegebenen Verfahrens und der im nebengeordneten Anspruch 9 angegebenen Datenverarbeitungsanlage möglich.

Besonders vorteilhaft ist, daß in Abhängigkeit der Betriebszustände der Datenverarbeitungsanlage die Zuordnung der Programmsegmente zu den Aktionen unterschiedlich erfolgt. Dadurch können mittels der Zuordnung der Programmsegmente zu den Aktionen komplexere Steuerprogramme realisiert werden, da bei der Zuordnung berücksichtigt wird, in welchem Betriebszustand sich die Datenverarbeitungsanlage befindet. Beispielsweise wird eine bestimmte Aktion unterschiedlich, d.h. unter Zuhilfenahme von unterschiedlichen Programmsegmenten durchgeführt werden, je nach dem, ob die Aktion ausgehend von einem Ausgangsbetriebszustand der Datenverarbeitungsanlage oder ausgehend von einem Zielbetriebszustand der Datenverarbeitungsanlage, der nach der Durchführung einer anderen Aktion eingenommen wurde, durchgeführt wird.

Weiterhin ist es von Vorteil, daß die Betriebszustände in eine erste Klasse von Betriebszuständen und in eine zweite Klasse von Betriebszuständen eingeteilt werden, wobei die Zuordnung der Programmsegmente zu den Aktionen in Abhängigkeit der Klasse von Betriebszuständen erfolgt. Dadurch werden mittels des erfindungsgemäßen Verfahrens noch komplexere Programmstrukturen für Steuerprogramme erzeugt werden. Dabei hängt die Zuordnung der Programmsegmente zu den Aktionen von der Klasse der Betriebszustände, zwischen denen eine Aktion einen Übergang hervorruft, ab. Beispielsweise bedient sich die Durchführung einer Aktion unterschiedlicher Teilschritte, was zu einer Zuordnung von unterschiedlichen Programmsegmenten zu dieser Aktion führt, je nachdem, ob die Aktion einerseits, beispielsweise ausgehend von einem Ausgangsbetriebszustand der Datenverarbeitungsanlage oder ausgehend von einem Zielbetriebszustand der Datenverarbeitungsanlage durchgeführt wird, und andererseits beispielsweise von unterschiedlichen, an die Datenverarbeitungsanlage angeschlossenen Geräten ausgelöst wird.

Weiterhin ist von Vorteil, daß die Zuordnung der Programmsegmente zu den Aktionen tabellenartig gespeichert ist. Dadurch ist das Steuerprogramm der Datenverarbeitungsanlage leicht wartbar.

Weiterhin ist es von Vorteil, daß eine Änderung der Steuerung der Datenverarbeitungsanlage lediglich durch eine Änderung der Zuordnung bewirkt wird. Dadurch ist das Steuerprogramm der Datenverarbeitungsanlage und die Datenverarbeitungsanlage gut testbar und ebenfalls leicht wartbar.

Weiterhin ist es von Vorteil, daß während der Laufzeit des Steuerprogramms die Steuerung der Datenverarbeitungsanlage geändert wird. Dadurch ist eine große Betriebssicherheit des Steuerprogramms und der Datenverarbeitungsanlage möglich, da sich bei einer notwendigen Änderung der Steuerung der Datenverarbeitungsanlage zumindest keine vollständige Betriebsunterbrechung des Steuerprogramms und der Datenverarbeitungsanlage notwendig wird.

Es ist weiterhin von Vorteil, daß den Aktionen wenigstens teilweise die Durchführung einer Datenverarbeitungsfunktion, insbesondere eine Leistungsfunktion einer Telekommunikationsanlage, entspricht. Dadurch ist die Steuerung der Datenverarbeitungsanlage und das Verhalten der Datenverarbeitungsanlage leicht veränderbar und insbesondere im Hinblick auf eine Verwendung der Datenverarbeitungsanlage als Telekommunikationsanlage leicht konzipierbar, testbar und wartbar.

Weiterhin ist es von Vorteil, daß die erste und/oder die zweite Klasse von Betriebsarten von Signalen von an die Datenverarbeitungsanlage angeschlossenen Geräten bestimmt sind. Dadurch weist sowohl die Steuerung der Datenverarbeitungsanlage als auch die Datenverarbeitungsanlage selbst eine große Flexibilität in ihrer Reaktion auf äußere Einflüsse auf.

### Zeichnung

Ausführungsbeispiele der Erfindung sind in der Zeichnung dargestellt und in der nachfolgenden Beschreibung näher erläutert. Es zeigen:
Figur 1 eine Datenverarbeitungsanlage,
Figur 2 einen Ausschnitt aus dem Inhalt einer Speichereinheit mit einem ersten Ausführungsbeispiel einer Zuordnung von Programmsegmenten zu Aktionen und
Figur 3 ein Ausschnitt aus dem Inhalt der Speichereinheit mit einem zweiten Ausführungsbeispiel einer Zuordnung von Programmsegmenten zu Aktionen.

### Beschreibung der Ausführungsbeispiele

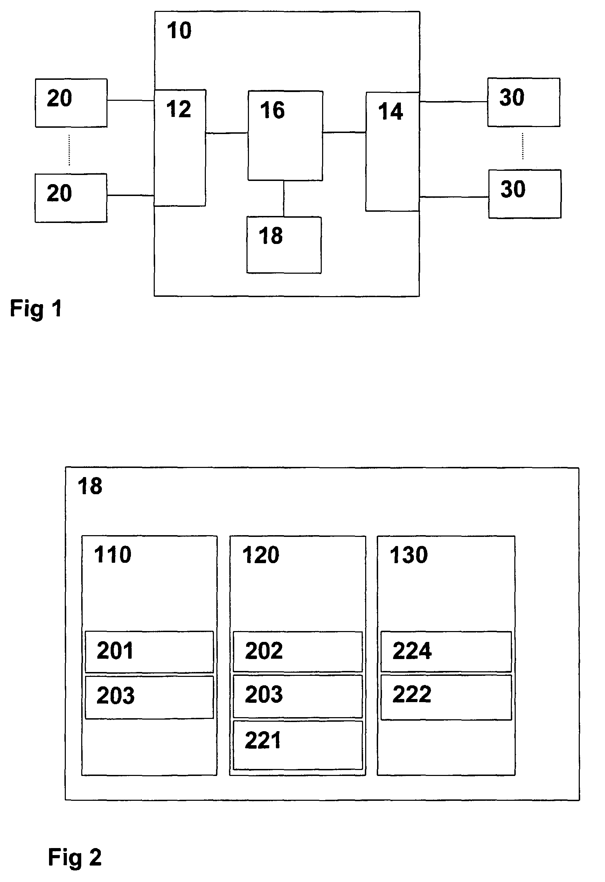

In Figur 1 ist eine Datenverarbeitungsanlage 10 mit einer Mehrzahl von daran angeschlossenen ersten Geräten 20 und mit einer Mehrzahl von daran angeschlossenen zweiten Geräten 30 dargestellt. Es handelt sich bei der Datenverarbeitungsanlage um eine allgemeine Datenverarbeitungsanlage und bei den daran angeschlossenen Geräten 20, 30 um beliebige, an eine Datenverarbeitungsanlage anschließbare Geräte 20, 30. Insbesondere soll das erfindungsgemäße Verfahren und die erfindungsgemäße Datenverarbeitungsanlage 10 aber anhand von Ausführungsbeispielen dargestellt werden, bei denen es sich bei der Datenverarbeitungsanlage 10 um eine Telekommunikationsanlage, insbesondere um eine Nebenstellenanlage oder dergleichen, handelt. Demgemäß handelt es sich bei den an die Datenverarbeitungsanlage 10 anschließbaren Geräten 20, 30 in den Ausführungsbeispielen insbesondere um an eine Telekommunikationsanlage anschließbare Geräte 20, 30, beispielsweise Telekommunikationsendgeräte oder dergleichen.

Die Datenverarbeitungsanlage 10 in Figur 1 umfaßt eine erste Ein/Ausgabeschnittstelle 12, eine zweite Ein/Ausgabeschnittstelle 14, eine Datenverarbeitungseinheit 16 und eine Speichereinheit 18. Die erste Ein/Ausgabeschnittstelle 12 und die zweite Ein/Ausgabeschnittstelle 14 sind jeweils mit der Datenverarbeitungseinheit 16 verbunden. Die erste Ein/Ausgabeschnittstelle 12 und die zweite Ein/Ausgabeschnittstelle 14 können ebenso zu einer einzigen Ein/Ausgabeschnittstelle zusammengefaßt sein. Weiterhin ist die Datenverarbeitungseinheit 16 mit der Speichereinheit 18 verbunden. Die ersten Geräte 20 sind mit der Datenverarbeitungsanlage über die erste Ein/Ausgabeschnittstelle 12 verbunden, währenddem die zweiten Geräte 30 mit der Datenverarbeitungsanlage 10 über die zweite Ein/Ausgabeschnittstelle 14 verbunden sind.

In Figur 2 ist ein Ausschnitt des Inhalts der Speichereinheit 18 dargestellt. Der dargestellte Ausschnitt des Speicherinhalts der Speichereinheit 18 umfaßt ein erstes Ausführungsbeispiel einer Zuordnung von einer Mehrzahl von Programmabschnitten 201, 202, 203 und 204 zu einer Mehrzahl von Aktionen 110, 120 und 130. Dabei ist einer ersten Aktion 110 ein erster Programmabschnitt 201 und ein dritter Programmabschnitt 203 zugeordnet, einer zweiten Aktion 120 ist ein zweiter Programmabschnitt 202, der dritte Programmabschnitt 203 und der erste Programmabschnitt 201 zugeordnet und einer dritten Aktion 130 ist ein vierter Programmabschnitt 204 und der zweite Programmabschnitt 202 zugeordnet.
Dabei gilt selbstverständlich, daß bei der Zuordnung von mehreren Programmabschnitten 201, 202, 203 und 204 zu einer Aktion 110, 120 und 130 die angegebene Reihenfolge der Programmabschnitte 201, 202, 203 und 204 beachtet werden muß.

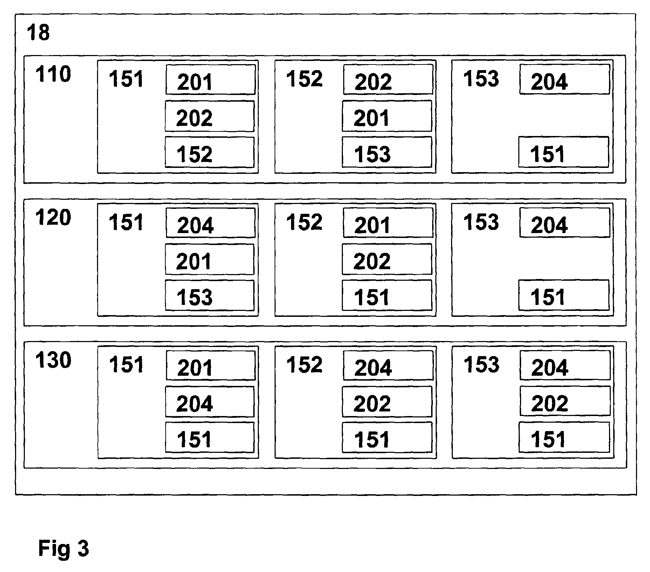

In Figur 3 ist ein Ausschnitt aus dem Inhalt der Speichereinheit 18 mit einem zweiten Ausführungsbeispiel einer Zuordnung von einer Mehrzahl von Programmabschnitten 201, 202, 203 und 204 zu den Aktionen 110, 120 und 130 dargestellt. Für jede Aktion 110, 120 und 130 sind die ihr zugeordneten Programmabschnitte 201, 202, 203 und 204 in Abhängigkeit eines ersten Betriebszustandes 151, eines zweiten Betriebszustandes 152, und eines dritten Betriebszustandes 153 dargestellt, wobei zusätzlich zu der Zuordnung der Programmabschnitte 201, 202, 203 und 204 zu den Aktionen 110, 120, und 130 in Abhängigkeit der Betriebszustände 151, 152 und 153 ein Betriebszustand 151, 152 und 153 angegeben ist, der nach der Abarbeitung der jeweils zugeordneten Programmabschnitte 201, 202, 203 und 204 eingenommen wird.

Die Betriebszustände 151, 152, und 153, die Aktionen 110, 120 und 130 und die Programmabschnitte 201, 202, 203 und 204 sind selbstverständlich lediglich Repräsentanten für eine Mehrzahl von Betriebszuständen, Aktionen und Programmabschnitten.
Für die erste Aktion 110 sieht das zweite Ausführungsbeispiel der Zuordnung folgendes vor:
- die Abarbeitung des ersten Programmabschnittes 201 und des zweiten Programmabschnitts 202 und anschließend das Einnehmen des zweiten Betriebszustands 152, für den Fall, daß sich die Datenverarbeitungsanlage 10 zuvor im ersten Betriebszustand 151 befand,
- die Abarbeitung des zweiten Programmabschnitts 202 und des ersten Programmabschnitts 201 und die nachfolgende Einnahme des dritten Betriebszustandes 153, falls sich die Datenverarbeitungsanlage 10 zuvor im Betriebszustand 152 befand, und
- die Abarbeitung des vierten Programmabschnitts 204 und die Einnahme des ersten Betriebszustandes 151, falls sich die Datenverarbeitungsanlage 10 zuvor im dritten Betriebszustand 153 befand.

Weiterhin sieht das zweite Ausführungsbeispiel der Zuordnung für die zweite Aktion 120 folgendes vor:
- die Abarbeitung des vierten Programmabschnitts 204 und des ersten Programmabschnitts 201 und das nachfolgende Einnehmen des dritten Betriebszustandes 153, falls sich die Datenverarbeitungsanlage 10 zuvor im ersten Betriebszustand 151 befand,
- die Abarbeitung des ersten Programmabschnitts 201 und des zweiten Programmabschnitts 202 und das nachfolgende Einnehmen des ersten Betriebszustandes 151, falls sich die Datenverarbeitungsanlage 10 zuvor im zweiten Betriebszustand 152 befand und
- die Abarbeitung des vierten Programmabschnitts 204 und die nachfolgende Einnahme des ersten Betriebszustandes 151, falls sich die Datenverarbeitungsanlage 10 zuvor im dritten Betriebszustand 153 befand.

Weiterhin sieht das zweite Ausführungsbeispiel der Zuordnung für die dritte Aktion 130 folgendes vor:
- Die Abarbeitung des ersten Programmabschnitts 201 und des vierten Programmabschnitts 204 und die nachfolgende Einnahme des ersten Betriebszustandes 151, falls sich die Datenverarbeitungsanlage 10 zuvor im ersten Betriebszustand 151 befand,
die Abarbeitung des vierten Programmabschnitts 204 und des zweiten Programmabschnitts 202 und die nachfolgende Einnahme des ersten Betriebszustandes 151, falls sich die Datenverarbeitungsanlage 10 zuvor im zweiten Betriebszustand 152 befand und
- die Abarbeitung des vierten Programmabschnitts 204 und des zweiten Programmabschnitts 202 und die nachfolgende Einnahme des ersten Betriebszustandes 151, falls sich die Datenverarbeitungsanlage 10 zuvor im dritten Betriebszustand 153 befand.

Das erfindungsgemäße Verfahren und die erfindungsgemäße Datenverarbeitungsanlage 10 sehen vor, daß das Steuerprogramm, das die Datenverarbeitungsanlage 10 steuert, weitgehend von der in der Speichereinheit 18 abgespeicherten Zuordnung der Programmsegmente 201, 202, 203 und 204 zu den Aktionen 110, 120, 130 bestimmt wird. Im ersten Ausführungsbeispiel der Zuordnung von Programmsegmenten 201; 202, 203 und 204 zu Aktionen 110, 120 und 130 bestimmt das Steuerprogramm in einem nicht dargestellten fünften Programmabschnitt, insbesondere in periodischen Zeitabständen, die aktuell auszuführende Aktion, 110, 120 und 130, woraufhin aus der Zuordnung der Programmabschnitte 201, 202, 203 und 204 zu Aktionen 110, 120 und 130 die auszuführenden Programmabschnitte 201, 202 203 und 204 feststellbar sind. Der fünfte Programmabschnitt kann beispielsweise in Form einer Abfrageschleife gestaltet sein, so daß bei jeder auszuführenden Aktion 110, 120, 130 der Datenverarbeitungsanlage 10 ein Zugriff auf die Speichereinheit 18 durchgeführt wird und so die gemäß der durchzuführenden Aktion 110, 120 und 130 auszuführenden Programmabschnitte 201, 202, 203 und 204 bestimmt und nachfolgend abgearbeitet werden. Wenn dabei Programmabschnitte 201, 202, 203 und 204 mehrfach, beispielsweise bei der Durchführung von verschiedenen Aktionen 110, 120 und 130, auszuführen sind, müssen diese Programmabschnitte 201, 202, 203 und 204 lediglich einmal codiert sein. Für die mehrfache Ausführung solcher Programmabschnitte 201, 202, 203 und 204 genügt dann einfach der mehrfache Aufruf solcher Programmabschnitte 201, 202, 203 und 204 im Rahmen der Durchführung von Aktionen 110, 120 und 130 gemäß der in der Speichereinheit 18 abgelegten Zuordnung von Programmabschnitten 201, 202, 203 und 204 zu Aktionen 110, 120 und 130.

Eine Änderung der Steuerung der Datenverarbeitungsanlage 10 kann sehr einfach mittels einer Änderung der Zuordnung von Programmabschnitten 201, 202, 203 und 204 zu Aktionen 110, 120 und 130 durchgeführt werden. Dazu wird einfach die Zuordnung, die in der Speichereinheit 18 abgelegt ist, geändert. Eine solche Änderung ist deswegen möglich, weil die Zuordnung der Programmabschnitte 201, 202, 203 und 204 zu den Aktionen 110, 120 und 130 gemäß eines vorgegebenen Musters gespeichert wird. Das Muster ist dabei systemunabhängig vorgegeben. Dies bedeutet, daß die Zuordnung der Programmabschnitte 201, 202, 203, 204 zu den Aktionen 110, 120, 130 auf eine dem Benutzer, beispielsweise dem Administrator der Datenverarbeitungsanlage, transparente Weise festgelegt und gespeichert ist. Bei Verwendung eines Compilers wird ebenfalls eine Zuordnung, beispielsweise von Sprungadressen für die Abarbeitung von Programmabschnitten abgespeichert. Dies geschieht aber auf eine dem Benutzer nicht transparenten Weise, so daß beispielsweise für eine Änderung oder Ergänzung der Zuordnung ein erneuter Compilerlauf durchgeführt werden muß. Dies kann bei der vorliegenden Erfindung vermieden werden. Daher ist die Zuordnung der Programmsegmente 201, 202, 203 und 204 zu den Aktionen 110, 120 und 130 transparent beziehungsweise systemunabhängig. Eine Änderung der Zuordnung der Programmsegmente 201, 202, 203 und 204 zu den Aktionen 110, 120 und 130 kann somit für eine Änderung der Steuerung der Datenverarbeitungsanlage 10 vorgenommen werden, ohne daß eine Neukompilierung des gesamten Steuerprogramms vorgenommen werden müßte. Das vorgegebene Muster, gemäß dem die Zuordnung der Programmsegmente 201, 202, 203 und 204 zu den Aktionen 110, 120 und 130 gespeichert ist, kann beliebig gewählt werden, wobei in einer bevorzugten Ausführungsform des erfindungsgemäßen Verfahrens und der erfindungsgemäßen Datenverarbeitungsanlage 10 eine tabellenartige Speicherung der Zuordnung realisiert ist. Dadurch ist eine besonders leichte Modifizierbarkeit der Zuordnung von Programmsegmenten 201, 202, 203 und 204 zu Aktionen 110, 120 und 130 möglich.

Beim erfindungsgemäßen Verfahren und bei der erfindungsgemäßen Datenverarbeitungsanlage 10 ist das Steuerprogramm zur Steuerung der Datenverarbeitungsanlage 10 in einer besonders vorteilhaften Ausführungsform auch während der Laufzeit des Steuerprogramms modifizierbar. Dies wird beispielhaft dadurch realisiert, daß von der zu ändernden Zuordnung der Programmsegmente 201, 202, 203 und 204 zu den Aktionen 110, 120 und 130 in der Speichereinheit 18 in einem ersten Schritt eine Kopie erstellt wird und in einem zweiten Schritt ein Zeiger, der auf die jeweils gültige Zuordnung der Programmsegmente 201, 202, 203 und 204 zu den Aktionen 110, 120 und 130 verweist, auf die kopierte Zuordnung eingestellt wird. Daraufhin kann die ursprüngliche Zuordnung, auf die durch die Zeigerumstellung vom im Betrieb befindlichen Steuerprogramm nicht mehr zugegriffen wird, modifiziert werden. Nach der Modifikation wird die Zeigerumstellung wieder rückgängig gemacht, so daß als gültige Zuordnung die modifizierte Zuordnung verwendet wird.

Im zweiten Ausführungsbeispiel einer Zuordnung von Programmabschnitten 201, 202, 203 und 204 zu Aktionen 110, 120 und 130 ist jeder Aktion 110, 120 und 130 ein oder mehrere Programmabschnitte 201, 202, 203 und 204 in Abhängigkeit von Betriebszuständen 151, 152, 153 der Datenverarbeitungsanlage 10 so zugeordnet, daß bei einer Abfolge von Programmabschnitten 201, 202, 203 und 204, die einer bestimmten Aktion 110, 120 und 130 zugeordnet sind, sowohl ein Ausgangsbetriebszustand als auch ein Zielbetriebszustand der jeweiligen Aktionen 110, 120, 130 angegeben ist. Dabei sind die Ausgangsbetriebszustände und die Zielbetriebszustände identisch mit den Betriebszuständen 151, 152 und 153. Dies ist lediglich so zu verstehen, daß beispielsweise der erste Programmabschnitt 201 und der zweite Programmabschnitt 202 ausgeführt wird, wenn sich die Datenverarbeitungsanlage 10 im ersten Betriebszustand 151 befindet und die erste Aktion 110 durchgeführt werden soll, wobei im Anschluß an die Durchführung des ersten Programmabschnitts 201 und des zweiten Programmabschnitts 202 sich die Datenverarbeitungsanlage 10 im zweiten Betriebszustand 152 befindet. Falls daraufhin die zweite Aktion 120 durchgeführt werden soll, wird der erste Programmabschnitt 201 und der zweite Programmabschnitt 202 durchgeführt, weil das zweite Ausführungsbeispiel der Zuordnung von Programmabschnitten 201, 202, 203 und 204 zu Betriebszuständen 151, 152 und 153 für die Durchführung der zweiten Aktion 120 der im zweiten Betriebszustand 152 befindlichen Datenverarbeitungsanlage 10 genau diese Abfolge von Programmabschnitten - erster Programmabschnitt 201 und anschließend zweiter Programmabschnitt 202 - vorsieht, wobei sich daran anschließend die Datenverarbeitungsanlage 10 im ersten Betriebszustand 151 befindet.

Man könnte das zweite Ausführungsbeispiel der Zuordnung von Programmabschnitten 201, 202, 203 und 204 zu Aktionen 110, 120 und 130 auch als zweidimensionale Zuordnung auffassen, weil eine Abfolge von zugeordneten Programmabschnitten 201, 202, 203 und 204 zu den Aktionen 110, 120 und 130 - erste Dimension - in Abhängigkeit der Betriebszustände 151, 152 und 153 - zweite Dimension - vorsieht. Das erste Ausführungsbeispiel der Zuordnung von Programmabschnitten 201, 202, 203 und 204 zu Aktionen 110, 120 und 130 kann somit auch als eindimensional bezeichnet werden, weil eine Abfolge von Programmabschnitten 201, 202, 203 und 204 lediglich den verschiedenen Aktionen 110, 120 und 130 zugeordnet wird. Des weiteren sind analog zum ersten und zum zweiten Ausführungsbeispiel der Zuordnung von Programmabschnitten 201, 202, 203 und 204 zu Aktionen 110, 120 und 130 auch Zuordnungen realisierbar , die als höherdimensional, beispielsweise dreidimensional, vierdimensional oder dergleichen, bezeichnet werden können. Dabei werden beispielsweise unter den verschiedenen Betriebszuständen Klassen bestimmt, wobei die Zuordnung der Programmabschnitte 201, 202, 203 und 204 zu den Aktionen 110, 120 und 130 in Abhängigkeit der Klasse der Betriebszustände 151, 152 und 153 erfolgt.

Die Änderungen der Steuerung der Datenverarbeitungsanlage 10 während der Laufzeit des Steuerprogramms kann beispielsweise dadurch realisiert werden, daß es der Datenverarbeitungseinheit 16 im Zusammenspiel mit der Speichereinheit 18 möglich ist, die Zuordnung von Programmabschnitten 201, 202, 203 und 204 zu Aktionen 110, 120 und 130 in einem nicht benötigten Bereich der Speichereinheit 18 zu duplizieren, die duplizierte Zuordnung zu aktivieren, die ursprüngliche Zuordnung zu ändern und anschließend die geänderte Zuordnung wieder zu aktivieren. Die erfindungsgemäße Datenverarbeitungsanlage 10 sieht in einer vorteilhaften Ausführungsform die Datenverarbeitungseinheit 16 derart vor, daß eine Änderung der in der Speichereinheit 18 abgelegten Zuordnung zu einer entsprechenden Änderung der Steuerung der Datenverarbeitungsanlage 10 führt.

Als ein erstes Beispiel für die Unterteilung von Aktionen in verschiedene Segmente, die von Programmabschnitten ausgeführt werden können, sei hier für die Aktion des Startens eines Autos und für einen Gangwechsel die verschiedenen Segmente aufgeführt, die von unterschiedlichen Programmabschnitten ausgeführt werden können.

Startvorgang eines Autos:
- Türöffnen,
- Einsteigen,
- Anschnallen,
- Schlüssel stecken
- Kupplung treten,
- Gang einlegen (Leerlauf),
- Kupplung loslassen,
- Handbremse
- Zündschlüssel drehen
- Gas geben,
   Motor läuft

Gangwechsel:
- Kupplung treten,
- Gang einlegen (neuer Gang, z.B. zweiter Gang),
- Kupplung loslassen
   Gang gewechselt

Als ein zweites Beispiel für die Unterteilung von Aktionen in verschiedene Segmente, die von Programmabschnitten ausgeführt werden können, sei hier eine Telekommunikationsanlage die Aktion des Verbindungsaufbaus, die Aktion des Einrichtens einer Rufumleitung und die Aktion des Vornehmens einer Rückfrage mit dem jeweils zugehörigen Systemen aufgeführt.

Verbindungsaufbau zwischen einem Teilnehmer A und einem Teilnehmer B:
- Hörer abheben
- Wahlton einschalten
- Wahlvorgang durchführen (Rufnummer von Teilnehmer B)
- Verbindungsaufbau durchführen

Die Verbindung zwischen Teilnehmer A und B ist aktiv.

Einrichtung einer Rufumleitung:
- Hörer abheben
- Wahlton einschalten
- Wahlvorgang durchführen (Rufnummer des Zielortes der Rufumleitung)
- Rufumleitung aktivieren
- Hörer auflegen

Die Rufumleitung ist eingerichtet.

Durchführung einer Rückfrage zu einem Teilnehmer C, wobei sich die Telekommunikationsanlage vor der Rückfrage im Ausgangsbetriebszustand "Verbindung zwischen Teilnehmer A und Teilnehmer B ist aufgebaut", und nach der Rückfrage im Zielbetriebszustand 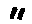 Die Verbindung zwischen Teilnehmer A und Teilnehmer C ist aktiv und die Verbindung zwischen Teilnehmer A und Teilnehmer B ruht, ist aber nicht unterbunden", befindet.
- Rückfragetaste betätigen
- Wahlton einschalten
- Wahlvorgang durchführen (Rufnummer von Teilnehmer C)
- Verbindungsaufbau durchführen
   (Teilnehmer kann zurückgefragt werden)

Die einzelnen Segmente sind in sich abgeschlossene Einheiten. Diese können für eine andere Aktion in der gleichen Funktion wieder benutzt werden. Jedes Segment kann mit Übergabeparametern versehen sein und durch verschiedene Übergabeparameter zu unterschiedlichen Ergebnissen führen. Im ersten Beispiel betrifft dies die Wahl des Ganges und im zweiten Beispiel die Wahl der Rufnummer des Teilnehmers. Für die verschiedenen Aktionen werden also die fest definierten Segmente oder Programmabschnitte in Reihe gesetzt. Erfindungsgemäß wird diese Zuordnung von Programmabschnitten zu Aktionen programmtechnisch in einer Tabelle realisiert. Für die einzelnen Segmente wird jeweils eine Prozedur bzw. ein Programmabschnitt definiert. Die Programmabschnitte werden entsprechend der für die Aktion definierte Reihenfolge der Segmente sequentiell abgearbeitet. Um eine Aktion durchzuführen, müssen in der Regel mehrere Programmabschnitte oder Segmente durchlaufen werden.

## Patentansprüche

1. Verfahren zur Steuerung einer Datenverarbeitungsanlage (10), insbesondere Telekommunikationsanlage, mittels eines Steuerprogramms mit folgenden Schritten:
- das Steuerprogramm wird in Programmabschnitte (201, 202, 203, 204) unterteilt,
- von der Datenverarbeitungsanlage (10) werden wenigstens zwei Betriebszustände (151, 152, 153) eingenommen,
- Übergänge zwischen den Betriebszuständen (151, 152, 153) werden durch Aktionen (110, 120, 130) der Datenverarbeitungsanlage (10) durchgeführt,
- jeder der Aktionen (110, 120, 130) wird wenigstens ein Programmabschnitt (201, 202, 203, 204) des Steuerprogramms zugeordnet,
- die Datenverarbeitungsanlage (10) führt durch den wenigstens einen Programmabschnitt (201, 202, 203, 204) die Entsprechende der Aktionen (110, 120, 130) durch und
- die Zuordnung der Programmabschnitte (201, 202, 203, 204) zu den Aktionen (110, 120, 130) wird gemäß eines systemunabhängig vorgegebenen Musters gespeichert.

2. Verfahren nach Anspruch 1, dadurch gekennzeichnet, daß in Abhängigkeit der Betriebszustände (151, 152, 153) der Datenverarbeitungsanlage (10) die Zuordnung der Programmabschnitte (201, 202, 203, 204) zu den Aktionen (110, 120, 130) unterschiedlich erfolgt.

3. Verfahren nach Anspruch 1 oder 2, dadurch gekennzeichnet, daß die Betriebszustände (151, 152, 153) in eine erste Klasse von Betriebszuständen (151, 152, 153) und in eine zweite Klasse von Betriebszuständen (151, 152, 153) eingeteilt werden, wobei die Zuordnung der Programmabschnitte (201, 202, 203, 204) zu den Aktionen (110, 120, 130) in Abhängigkeit der Klasse von Betriebszuständen (151, 152, 153) erfolgt.

4. Verfahren nach Anspruch 1, 2 oder 3, dadurch gekennzeichnet, daß die Zuordnung der Programmabschnitte (201, 202, 203, 204) zu den Aktionen (110, 120, 130) tabellenartig gespeichert ist.

5. Verfahren nach einem der Ansprüche 1 bis 4, dadurch gekennzeichnet, daß eine Änderung der Steuerung der Datenverarbeitungsanlage (10) lediglich durch eine Änderung der Zuordnung bewirkt wird.

6. Verfahren nach Anspruch 5, dadurch gekennzeichnet, daß während der Laufzeit des Steuerprogramms die Steuerung der Datenverarbeitungsanlage (10) geändert wird.

7. Verfahren nach einem der Ansprüche 1 bis 6, dadurch gekennzeichnet, daß den Aktionen (110, 120, 130) wenigstens teilweise die Durchführung einer Datenverarbeitungsfunktion, insbesondere eine Leistungsfunktion einer Telekommunikationsanlage, entspricht.

8. Verfahren nach einem der Ansprüche 1 bis 7, dadurch gekennzeichnet, daß die erste und/oder die zweite Klasse von Betriebszuständen (151, 152, 153) von Signalen von an die Datenverarbeitungsanlage (10) angeschlossenen Geräten (20, 30) bestimmt sind.

9. Datenverarbeitungsanlage (10), insbesondere Telekommunikationsanlage, mit einer Speichereinheit (18) und einer Datenverarbeitungseinheit (16), wobei die Datenverarbeitungsanlage (10) von einem Steuerprogramm steuerbar ist, mit folgenden Merkmalen:
- das Steuerprogramm ist in Programmabschnitte (201, 202, 203, 204) unterteilt,
- von der Datenverarbeitungseinheit sind wenigstens zwei Betriebszustände (151, 152, 153) einnehmbar,
- Übergänge zwischen den Betriebszuständen (151, 152, 153) sind durch Aktionen (110, 120, 130) der Datenverarbeitungseinheit (16) durchführbar,
- jeder der Aktionen (110, 120, 130) ist wenigstens ein Programmabschnitt (201, 202, 203, 204) des Steuerprogramms zugeordnet,
- durch den wenigstens einen Programmabschnitt (201, 202, 203, 204) ist die Entsprechende der Aktionen (110, 120, 130) durchführbar und
- in der Speichereinheit (18) ist die Zuordnung der Programmabschnitte (201, 202, 203, 204) zu den Aktionen (110, 120, 130) gemäß eines systemunabhängig vorgegebenen Musters gespeichert.

10. Datenverarbeitungsanlage (10) nach Anspruch 9, dadurch gekennzeichnet, daß in Abhängigkeit der Betriebszustände (151, 152, 153) der Datenverarbeitungsanlage (10) die Zuordnung der Programmabschnitte (201, 202, 203, 204) zu den Aktionen (110, 120, 130) unterschiedlich erfolgt, wobei die Zuordnung der Programmabschnitte (201, 202, 203, 204) zu den Aktionen (120, 120, 130) in der Speichereinheit (18) in Abhängigkeit der Betriebszustände (151, 152, 153) erfolgt.

11. Datenverarbeitungsanlage (10) nach Anspruch 9 oder 10, dadurch gekennzeichnet, daß die Betriebszustände (151, 152, 153) in eine erste Klasse von Betriebszuständen (151, 152, 153) und in eine zweite Klasse von Betriebszuständen (151, 152, 153) einteilbar sind, wobei die Zuordnung der Programmabschnitte (201, 202, 203, 204) zu den Aktionen (110, 120, 130) in Abhängigkeit der Klasse von Betriebszuständen (151, 152, 153) erfolgt.

12. Datenverarbeitungsanlage (10) nach einem der Ansprüche 9 bis 11, dadurch gekennzeichnet, daß die Zuordnung der Programmabschnitte (201, 202, 203, 204) zu den Aktionen (110, 120, 130) in der Speichereinheit (18) tabellenartig gespeichert ist.

13. Datenverarbeitungsanlage (10), nach einem der Ansprüche 9 bis 12, dadurch gekennzeichnet, daß die Datenverarbeitungsanlage (10) Mittel umfaßt, eine Änderung der Steuerung der Datenverarbeitungsanlage (10) lediglich durch eine Änderung der Zuordnung der Programmabschnitte (201, 202, 203, 204) zu den Aktionen (110, 120, 130) zu bewirken.

14. Datenverarbeitungsanlage (10) nach Anspruch 13, dadurch gekennzeichnet, daß die Datenverarbeitungsanlage (10) Mittel umfaßt, während der Laufzeit des Steuerprogramms die Steuerung der Datenverarbeitungsanlage (10) zu ändern.

15. Datenverarbeitungsanlage (10) nach einem der Ansprüche 9 bis 14, dadurch gekennzeichnet, daß den Aktionen (110, 120, 130) wenigstens teilweise die Durchführung einer Datenverarbeitungsfunktion, insbesondere eine Leistungsfunktion einer Telekommunikationsanlage, entspricht.

16. Datenverarbeitungsanlage (10) nach einem der Ansprüche 9 bis 15, dadurch gekennzeichnet, daß die erste und/oder die zweite Klasse von Betriebszuständen (151, 152, 153) von Signalen von an die Datenverarbeitungsanlage (10) angeschlossenen Geräten (20,30) bestimmt sind.
